# EUROPÄISCHE PATENTSCHRIFT

(11) **EP 0 387 634 B1**
(45) Veröffentlichungstag und Bekanntmachung des Hinweises auf die Patenterteilung: **07.06.1995**
(21) Anmeldenummer: 90104083.2
(22) Anmeldetag: 02.03.1990
(51) Int. Cl.: F16K 1/00, F16K 1/32

(54) **Armatur mit Hubbegrenzung**
Armature with stroke limitation
Armature avec limiteur de course

(30) Priorität: 13.03.1989 DE 3908072
(43) Veröffentlichungstag der Anmeldung: 19.09.1990
(73) Patentinhaber: KSB Aktiengesellschaft, 67227 Frankenthal (DE)
(72) Erfinder: Illy, Alois, D-6703 Limburgerhof (DE); Ruckert, Heinz-Jürgen, D-6711 Grossniedesheim (DE)

(56) Entgegenhaltungen:
- AT-B- 117 353
- CH-A- 77 838
- CH-A- 543 025
- DE-C- 417 143
- US-A- 3 330 167

## Beschreibung

Die Erfindung betrifft eine Armature mit einer Hubbegrenzung gemäß dem Oberbegriff des Hauptanspruches.

Dem Anmelder ist als Stand der Technik eine Armatur mit einer Hubbegrenzung bekannt, bei der eine metallische Kappe in übergreifender Weise auf eine Spindelmutter aufgeschraubt ist und dabei gleichzeitig die Spindelmutter mit dem Handrad verbindet. Ein eventuelles Lösen der Kappe wäre gleichbedeutend mit einem Lösen des Handrades, welches wiederum dessen Verlust bzw. bei entsprechender Einbaulage auch dessen Herabfallen nach sich ziehen kann. Auch hat die metallische Kappe den Nachteil, daß sie wärmeleitend ist und damit personengefährdend sein kann.

Aus der AT-B-117 353 ist eine Bewegungsvorrichtung für Absperrorgane bekannt, durch die unterschiedliche Bewegungsgeschwindigkeiten für eine Spindel mit daran angebrachtem Verschlußstück verwirklicht werden können. Zu diesem Zweck wirkt die Spindelmutter auf eine zwischen Spindelmutter und Spindel zwischengeschaltete Hohlspindel ein. Die Kohlspindel besitzt Kupplungselemente, die vom Ende der Spindel betätigbar sind. Die Spindelmutter besitzt eine über das Handrad hinausragende, nach außen offene zylindrische Verlängerung. Deren Stirnseite wiederum verfügt über eine Formgebung, die ein kuppelndes Zusammenwirken mit den Kupplungselementen der Hohlspindel ermöglicht. Der Spindelhub wird durch einen innerhalb des strömungsführenden Gehäuses anliegenden Spindelbund begrenzt.

Der Erfindung liegt die Aufgabe zugrunde, eine einfache Armatur mit einer zuverlässigen Hubbegrenzung zu entwickeln. Die Lösung dieser Aufgabe erfolgt gemäß den Merkmalen der Ansprüche 1 bzw. 2. Ein an der Kappe anliegendes Spindelende belastet die Kappe in axialer Richtung auf Zug. Dabei besteht die Gefahr, daß der Befestigungsteil der Kappe in radialer Richtung nach innen auslenkt und somit die Kappe aus der Befestigung, welche gemäß den Ausgestaltungen als Gewinde - oder Bajonettverbindung ausgebildet sein kann, herausrutscht. Durch eine im Bereich der Befestigungsebene, aber auf anderem Radius vorgesehene Führung des Befestigungsteiles wird ein Auslenken desselben und damit ein Lösen der Kappe unterbunden.

Mit der Ausgestaltung gemäß Anspruch 3 unterbindet die an der Spindelmutter anliegende Wand der Ausnehmung bzw. die Spindel selbst ein Auslenken des Befestigungsteiles.

Die Ausnehmung am Handrad ist so gestaltet, daß ein bündiger Übergang zwischen Kappe und Handrad gewährleistet werden kann. Die weiteren Ausgestaltungen der Ansprüche 4 bis 6 enthalten Befestigungsarten zwischen Handrad und Kappe. Hierbei kann die Kappe auch in die Ausnehmung des Handrades eingepreßt sein und durch bekannte Mittel gegen axiales Herausziehen gesichert sein.

Gemäß einer weiteren Ausgestaltung besteht die Kappe aus Kunststoff, wodurch sie gleichzeitig wärmeisolierend und damit bei der Verwendung heißer Medien nicht personengefährdend ist.

Ausführungsbeispiele der Erfindung sind in den Zeichnungen dargestellt und werden im folgenden näher beschrieben. Es zeigen die
- Fig. 1: einen Schnitt durch ein Armaturengehäuseoberteil und die
- Fig. 2: einen Ausschnitt mit einer anderen Handradnabe.

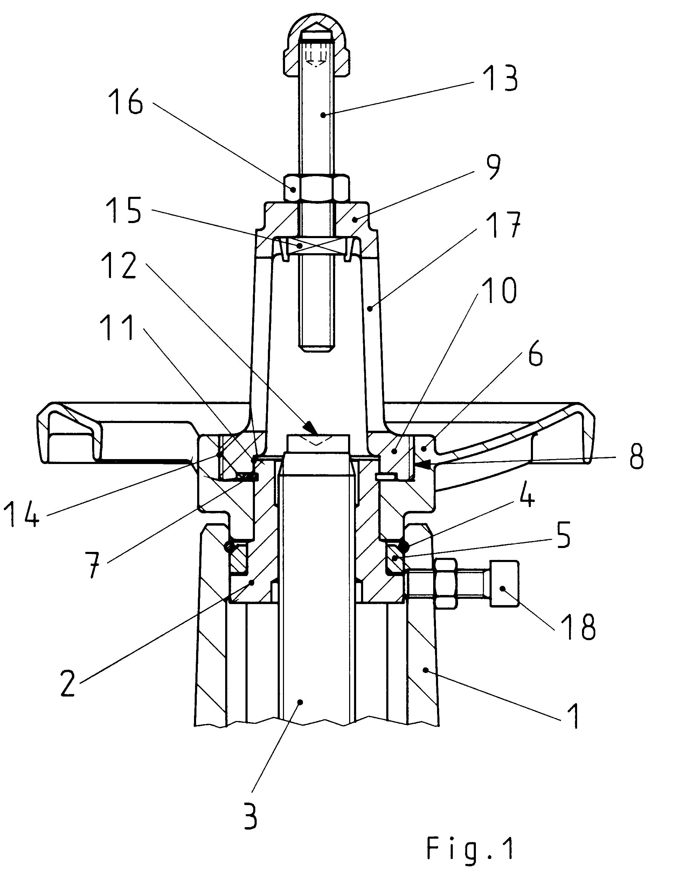

Gemäß der Fig. 1 ist innerhalb eines Gehäuses (1) eine Spindelmutter (2) gelagert, welche mit einer steigenden Spindel (3) zusammenwirkt. Ein durch einen Sicherungsring (4) gehaltener Lagerring (5) hält die Spindelmutter (2) in ihrer Position innerhalb des Gehäuses (1). Mit der Spindelmutter (2) wirkt ein Handrad (6) Zusammen, welches auf die Spindelmutter (2) aufgeschoben und durch einen Sicherungsring (7) gegen Verlieren gesichert ist. Das Handrad weist eine Ausnehmung (8) auf, in welche bei dem hier gezeigten Beispiel eine Kappe (9) mit einem Befestigungsteil (10) eingeschraubt ist. Das Befestigungsteil (10) weist eine Führung (11) auf, die wiederum mit der Spindelmutter (2) zusammenwirkt. Bei demjenigen Betriebszustand, bei dem das Spindelende (12) an dem eine Hubbegrenzung gewährleistenden Gewindestift (13) anliegt, entstehen innerhalb der Kappe (9) Zugkräfte. Diese wiederum haben die Tendenz, die Kappe (9) aus der Ausnehmung (8) herauszuziehen, wobei jedoch die Führung (11) dem zuverlässig entgegenwirkt. Diese verhindert nämlich, daß sich hierbei die Kappe (9) aus dem Befestigungsgewinde (14) durch eine Auslenkung zur Spindelachse herausziehen kann. Der Gewindestift (13) ist in einer Mutter (15) höhenverstellbar geführt und wird bei der gewählten Position durch eine Kontermutter (16) fixiert. Innerhalb der Kappe (9) angeordnete Schlitze (17) dienen gleichzeitig als Stellungsanzeiger für das Spindelende (12) und damit für den jeweiligen Öffnungsgrad der Armatur. Eine an sich bekannte Feststellvorrichtung (18) gewährleistet die Beibehaltung einer einmal gewählten Armatureneinstellung.

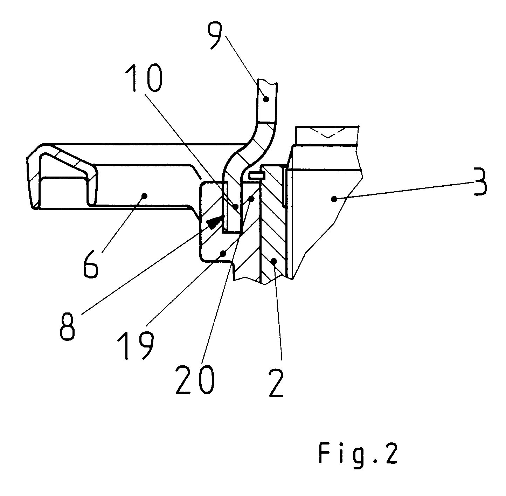

Gemäß Fig. 2 weist das Handrad (6), insbesondere dessen Nabenteil, eine Ausnehmung (8) auf, die vollständig in die Nabe (19) eingearbeitet ist und einer Ringnut entspricht. Ein die Ausnehmung (8) begrenzender Wandteil (20) der Nabe (19) stützt sich hierbei an der Spindelmutter (2) ab und verhindert somit ein Auslenken und ein dadurch bedingtes Lösen der Verbindung. Bei entsprechender Gestaltung kann die begrenzende Wand (20) auch direkt an der Spindel (3) anliegen. Das Befestigungsteil (10) ist hier in die ringnutförmige Ausnehmung (8) eingeschraubt und gleichzeitig mit seinem Innendurchmesser geführt.

## Patentansprüche

1. Armatur mit einer Spindelmutter (2) und damit zusammenwirkender steigender Spindel (3), einem kräfteübertragend mit der Spindelmutter verbundenem Handrad (6), wobei eine mit einem einstellbaren Anschlag versehene Kappe (9) den Hub der Spindel begrenzt, **dadurch gekennzeichnet**, daß ein Befestigungsteil (10) der Kappe an einer Ausnehmung (8) des Handrades (6) befestigt ist und daß im Bereich der Befestigungsebene auf anderem Durchmesser eine Führung für das Befestigungsteil (10) angebracht ist.

2. Armatur mit einer Spindelmutter (2) und damit zusammenwirkender steigender Spindel (3), einem kräfteübertragend mit einer Spindelmutter verbundenem Handrad (6), wobei eine mit einem einstellbaren Anschlag versehene Kappe (9) den Hub der Spindel begrenzt, **dadurch gekennzeichnet**, daß ein Befestigungsteil (10) der Kappe an der Spindelmutter (2) lösbar befestigt ist und daß im Bereich der Befestigungsebene auf anderem Durchmesser eine Führung für das Befestigungsteil (10) angebracht ist.

3. Armatur nach Anspruch 1, dadurch gekennzeichnet, daß eine die Ausnehmung (8) begrenzende Wand (20) an der Spindel (3) oder an der Spindelmutter (2) anliegt.

4. Armatur nach einem der Ansprüchen 1-3, dadurch gekennzeichnet, daß die Kappe (9) mit einem Gewinde (14) am Handrad (6) bzw. der Spindelmutter (2) befestigt ist.

5. Armatur nach einem der Ansprüchen 1-3, dadurch gekennzeichnet, daß die Kappe (9) am Handrad (6) bzw. an der Spindelmutter (2) mit einem Bajonettverschluß befestigt ist.

6. Armatur nach einem der Ansprüchen 1-3 dadurch gekennzeichnet, daß die Kappe (9) in die Ausnehmung (8) des Handrades (6) eingepreßt und durch bekannte Mittel gegen axiales Herausziehen gesichert ist.

7. Armatur nach einem oder mehreren der Ansprüche 1 bis 6, dadurch gekennzeichnet, daß die Kappe (9) als Kunststofformteil oder ähnlich nachgiebiges Formteil ausgebildet ist.

## Claims

1. A fitting comprising a valve stem nut (2) and a valve stem (3) adapted cooperate with it, a hand wheel (6) connected with the valve stem nut in a driving manner, a cap (9) provided with an adjustable abutment and serving to limit the stroke of the valve stem, characterized in that an attachment part (10) of the cap is secured in a recess (8) in the hand wheel (6) and in that at the plane of attachment at a different diameter a guide is provided for the attachment part (10).

2. A fitting comprising a valve stem nut (2) and a valve stem (3) adapted cooperate with it, a hand wheel (6) connected with the valve stem nut in a driving fashion, a cap (9) provided with an adjustable abutment and serving to limit the stroke of the valve stem, characterized in that an attachment part (10) of the cap is detachably connected on the valve stem nut (2) and in that at the plane of attachment at a different diameter a guide is provided for the attachment part (10).

3. The fitting as claimed in claim 1, characterized in that the wall (20) delimiting the recess (8) engages the valve stem (3) or the valve stem nut (3).

4. The fitting as claimed in any one of the claims 1 through 3, characterized in that the cap (9) is secured to a screw thread (14) on the hand wheel (6) or, respectively, on the valve stem nut (2).

5. The fitting as claimed in any one of the claims 1 through 3, characterized in that the cap (9) is secured on the hand wheel (6) or, respectively, on the valve stem nut (2) with a bayonet fastener.

6. The fitting as claimed in any one of the claims 1 through 5, characterized in that the cap (9) is force fitted into the recess (8) in the hand wheel (6) and is locked by known means to prevent its being drawn out axially.

7. The fitting as claimed in any one or more of the claims 1 through 6, characterized in that the cap (9) is designed in the form of a plastic or similar yielding molding.

## Revendications

1. Robinetterie avec un écrou à broche (2) et une broche montante (3) agissant avec ce dernier, avec une roue à main (6) liée à l'écrou de la broche pour transmettre les forces, dans laquelle un calot (9) muni d'une butée réglable limite la course de la broche **caractérisée** en ce qu'une pièce de fixation (10) du calot est fixée à un creux (8) de la roue à main (6) et en ce que, dans la zone du plan de fixation est placé sur un autre diamètre un guidage pour la pièce de fixation (10).

2. Robinetterie avec un écrou à broche (2) et une broche montante (3) agissant avec ce dernier, avec une roue à main (6) liée à l'écrou de la broche pour transmettre les forces, dans laquelle un calot (9) muni d'une butée réglable limite la course de la broche **caractérisée** en ce qu'une pièce de fixation (10) du calot est fixée de manière démontable à l'écrou de la broche (2) et en ce que, dans la zone du plan de fixation, est placé un guidage pour la pièce de fixation (10).

3. Robinetterie selon la revendication 1 caractérisée en ce qu'une paroi (20) limitant le creux (8) touche la broche (3) ou l'écrou de la broche (2).

4. Robinetterie selon l'une des revendications 1 à 3 caractérisée en ce que le calot (9) est fixé à la roue à main (6) ou à l'écrou de la broche (2) à l'aide d'un filetage (14).

5. Robinetterie selon l'une des revendications 1 à 3 caractérisée en ce que le calot (9) est fixé à la roue à main (6) ou à l'écrou de la broche (2) par un joint à baïonette.

6. Robinetterie selon l'une des revendications 1 à 3 caractérisée en ce que le calot (9) est pressé dans le creux (8) de la roue à main et bloqué par des moyens connus pour l'empêcher de sortir axialement.

7. Robinetterie selon l'une ou plusieurs des revendications 1 à 6 caractérisée en ce que le calot (9) a la forme d'une pièce moulée en matière plastique ou d'une pièce moulée déformable de manière semblable.
